Europäisches Patentamt

European Patent Office

Office européen des brevets

(19)

(11) **EP 1 031 713 B1**

(12) **FASCICULE DE BREVET EUROPEEN**

(45) Date de publication et mention
de la délivrance du brevet:
**20.10.2004 Bulletin 2004/43**

(51) Int Cl.⁷: **F02B 37/24**

(21) Numéro de dépôt: **00400381.0**

(22) Date de dépôt: **10.02.2000**

(54) **Procédé de commande d'un turbocompresseur à géométrie variable, notamment pour moteur Diesel**

Steuerverfahren eines Abgasturboladers mit veränderlicher Geometrie, inbesondere für einen Dieselmotor

Control method of a variable geometry turbocharger, especially for a diesel engine

(84) Etats contractants désignés:
**DE ES GB IT**

(30) Priorité: **23.02.1999 FR 9902239**

(43) Date de publication de la demande:
**30.08.2000 Bulletin 2000/35**

(73) Titulaire: **Renault s.a.s.**
**92100 Boulogne Billancourt (FR)**

(72) Inventeurs:
• **Jouno, Jean-Jacques**
**45330 Malesherbes (FR)**
• **Meurisse, Olivier**
**92160 Antony (FR)**
• **Stewart, Malcom**
**75013 Paris (FR)**

(56) Documents cités:
**EP-A- 0 323 256       EP-A- 0 747 585**
**EP-A- 0 870 914**

## Description

La présente invention est relative à un procédé et un dispositif de commande d'un turbocompresseur à géométrie variable notamment pour moteur à combustion interne de type Diesel équipant un véhicule automobile. Des turbocompresseurs de ce type permettent d'obturer plus ou moins le passage des gaz d'échappement vers la turbine en provenance du collecteur d'échappement du moteur.

Le brevet EP 0 786 589 décrit un procédé et un dispositif de commande d'un turbocompresseur à géométrie variable, à l'aide desquels la régulation de l'organe de modification de la géométrie du turbocompresseur est assurée en appliquant deux stratégies différentes de régulation qui sont utilisées en fonction de l'état de fonctionnement du moteur à combustion interne.

Chacune des deux stratégies de régulation est basée sur une commande de rétroaction agissant par l'intermédiaire d'une différence entre une pression de suralimentation de consigne et une pression d'admission mesurée dans le collecteur d'admission du moteur. L'une des stratégies appliquées en régime quasi-stationnaire du moteur consiste à utiliser un régulateur proportionnel-intégral, tandis que l'autre stratégie, utilisée en régime transitoire, consiste à employer un régulateur proportionnel-dérivé, la commutation entre les deux stratégies étant définie en fonction de la dérivée par rapport au temps de la pression de suralimentation.

Ce procédé de commande permet d'affiner, pendant les régimes transitoires, la montée en pression dans le collecteur d'admission afin d'éviter les dépassements trop importants de la pression réelle de suralimentation par rapport à la pression de suralimentation de consigne. Cependant, ce procédé de commande ne permet pas d'obtenir un fonctionnement irréprochable du moteur à combustion interne, dans certaines conditions particulières de conduite du véhicule. Ainsi, lorsque survient une demande d'accélération brusque de la part du conducteur du véhicule (enfoncement rapide de la pédale d'accélérateur), il est nécessaire d'augmenter brutalement la consigne de pression de suralimentation. De ce fait, l'écart entre la pression de suralimentation de consigne et la pression mesurée dans le collecteur d'admission augmente de manière brutale et persiste pendant un certain temps. Il en résulte non seulement un accroissement jusqu'à la valeur maximale du signal de commande de l'actuateur de réglage du turbocompresseur, mais également le maintien à cette valeur pendant un certain temps. De la sorte, le ou les organes mécaniques déterminant la section de passage des gaz d'échappement vers la roue de la turbine sont maintenus sur leur butée en ne laissant subsister qu'une faible section de passage des gaz d'échappement. De ce fait, la pression en amont de la turbine prend une valeur nettement supérieure à la pression de suralimentation, ce qui par voie de conséquence provoque un contrebalayage dans les cylindres du moteur et un étouffement de celui-ci. Cette situation persiste et le signal de commande de l'actuateur conserve sa valeur maximale, tant que la différence entre la pression de consigne et la pression d'admission mesurée ne change pas de signe, c'est-à-dire que la pression d'admission ne dépasse pas la pression de consigne. Le conducteur ressent ce phénomène comme un manque de nervosité du moteur à l'accélération.

L'invention a pour but de fournir un procédé de commande d'un turbocompresseur à géométrie variable n'entraînant aucun des inconvénients du procédé connu analysé ci-dessus.

Elle a donc pour objet un procédé de commande d'un turbocompresseur à géométrie variable destiné à assurer la suralimentation d'un moteur à combustion interne, notamment de type Diesel équipant un véhicule automobile, ledit turbocompresseur comprenant un actuateur apte à déterminer la section de passage des gaz d'échappement du moteur vers la roue de turbine du turbocompresseur,

- ledit procédé consistant

  - à engendrer un signal de commande dudit actuateur, sélectivement selon deux stratégies dont une première est mise en oeuvre en fonctionnement quasi-permanent dudit moteur et dont la seconde est appliquée en fonctionnement transitoire de celui-ci à la suite d'une demande brusque d'accélération dudit moteur, la sélection de ladite seconde stratégie étant effectuée par détection de l'évolution dans le temps d'au moins un paramètre représentatif de la charge demandée audit moteur, et
  - pendant la mise en oeuvre de ladite première stratégie, à déterminer ledit signal de commande au moyen d'une boucle de régulation à contreréaction dont les paramètres d'entrée sont la pression mesurée dans le collecteur d'admission dudit moteur et une pression d'admission de consigne représentative de la pression de suralimentation instantanée requise,

- ce procédé étant caractérisée en ce qu'il consiste également,

  - dès la sélection de la seconde stratégie, à établir pour ledit signal de commande une valeur résultant de la superposition d'une première composante sensiblement constante pendant ledit fonctionnement transitoire et déterminée dès ladite sélection, en fonction dudit paramètre représentatif de la charge et de la vitesse de rotation dudit moteur et une seconde composante qui, au début dudit fonctionnement transitoire prend comme valeur initiale celle de ladite première composante et qui décroit, à partir de cette valeur initiale, à une valeur à peu près nulle, de telle sorte que l'évolution dudit signal de commande provoque tout d'abord une réduction maximale, puis une augmentation progressive de ladite section de passage vers une valeur correspondant à la nouvelle charge demandée à la suite de ladite demande brusque d'accélération, et

- à maintenir la mise en oeuvre de ladite seconde stratégie au moins jusqu'à ce que ladite seconde composante atteigne la valeur zéro.

Grâce à ces caractéristiques, la section de passage des gaz d'échappement vers la roue de la turbine, est amenée à s'agrandir et donc la contre-pression est amenée à s'aménuiser avant qu'il ne se présente un risque d'étouffement du moteur. Cependant, le procédé permet néanmoins une mise en rotation rapide du moteur, car dès la mise en oeuvre de la seconde stratégie, la section de passage est fermée au maximum mais cette situation ne dure pas suffisamment pour que la contrepression devienne préjudiciable à un bon fonctionnement du moteur.

Selon d'autres caractéristiques avantageuses de l'invention, le procédé peut consister :

- à relever la valeur de ladite première composante dans une cartographie en fonction dudit paramètre représentatif de la charge demandée audit moteur et de la vitesse de rotation de celui-ci;
- à déterminer ledit paramètre représentatif de la charge demandée par le degré d'enfoncement de la pédale d'accélérateur associée audit moteur;
- à imposer à ladite seconde composante une loi de décroissance exponentielle;
- à engendrer ladite seconde composante par filtrage de ladite première composante en lui appliquant une équation de filtrage de la forme:

$$CO2(t) = K \cdot \frac{dCO1(t)}{dt} - T \cdot \frac{dCO2(t)}{dt}$$

dans laquelle:

- CO1 est la valeur de la première composante,
- CO2 est la valeur de la seconde composante,
- K est le gain de filtrage,
- T est une constante de temps;

- à écrêter la valeur résultant de la superposition desdites première et seconde composantes avant de l'appliquer audit actuateur;
- à comparer à un seuil prédéterminé la somme dudit paramètre représentatif de la charge, de la vitesse de rotation dudit moteur et de la dérivée dudit paramètre par rapport au temps, à appliquer un coefficient de pondération à chacun des termes de ladite somme et à opérer la commutation de ladite première stratégie à ladite seconde stratégie, lorsque ladite somme devient supérieure audit seuil; et
- à opérer la commutation de ladite seconde stratégie à ladite première stratégie, lorsque ladite somme devient inférieure audit seuil.

L'invention a également pour objet un dispositif pour la mise en oeuvre du procédé tel que défini ci-dessus

D'autres caractéristiques et avantages de la présente invention apparaîtront au cours de la description qui va suivre donnée uniquement à titre d'exemple et faite en se référant aux dessins annexés sur lesquels:

la figure 1 est un schéma fonctionnel d'un dispositif de commande d'un turbocompresseur permettant la mise en oeuvre de l'invention;
la figure 2 illustre par un organigramme simplifié l'opération de commutation entre les stratégies utilisées par le procédé selon l'invention; et
la figure 3 est un graphe du pourcentage de rapport cyclique d'ouverture (RCO;signal de commande) en fonction du temps, illustrant l'évolution de ce rapport lorsque survient une soudaine demande d'accélération du moteur à combustion interne équipé d'un turbocompresseur commandé selon le procédé de l'invention.

Avant de décrire en détail le procédé selon l'invention, on précisera d'abord que l'invention est applicable à des turbocompresseurs à géométrie variable du type décrit dans le brevet européen précité, à savoir à un turbocompresseur dans lequel le stator de turbine comprend des ailettes mobiles permettant de faire varier l'orientation des gaz d'échappement par rapport aux ailettes du rotor. Un tel type de turbocompresseur est fabriqué par exemple par la Société Garrett sous la dénomination VNT25 TD 2502. Cependant, l'invention est également applicable à des turbocompresseurs dont la section d'entrée de la turbine peut être réglée par un piston mobile axialement par rapport à l'axe du turbocompresseur. Un exemple d'un tel turbocompresseur est celui fabriqué par la Société précitée sous la dénomination VNTOP 15.

Les deux types de turbocompresseurs sont munis d'un actuateur électromagnétique de ce ou ces organes de réglage, que l'on peut alimenter par un courant pulsé dont le rapport cyclique détermine le degré de déplacement de ces organes, la vitesse de rotation du turbocompresseur étant d'autant plus élevé, par exemple que ce rapport cyclique est élevé.

La description du procédé qui va suivre s'appliquera plus particulièrement au deuxième type de turbocompresseur à piston axial mentionné ci-dessus; c'est pourquoi on désignera le paramètre de réglage appliqué à l'actuateur 1 par %RCO (pour pourcentage de Rapport Cyclique d'ouverture). Cependant, il est expressément précisé que la présente invention s'applique également, mutatis mutandis, aux turbocompresseurs ayant un stator de turbine dont les ailettes ont une position variables.

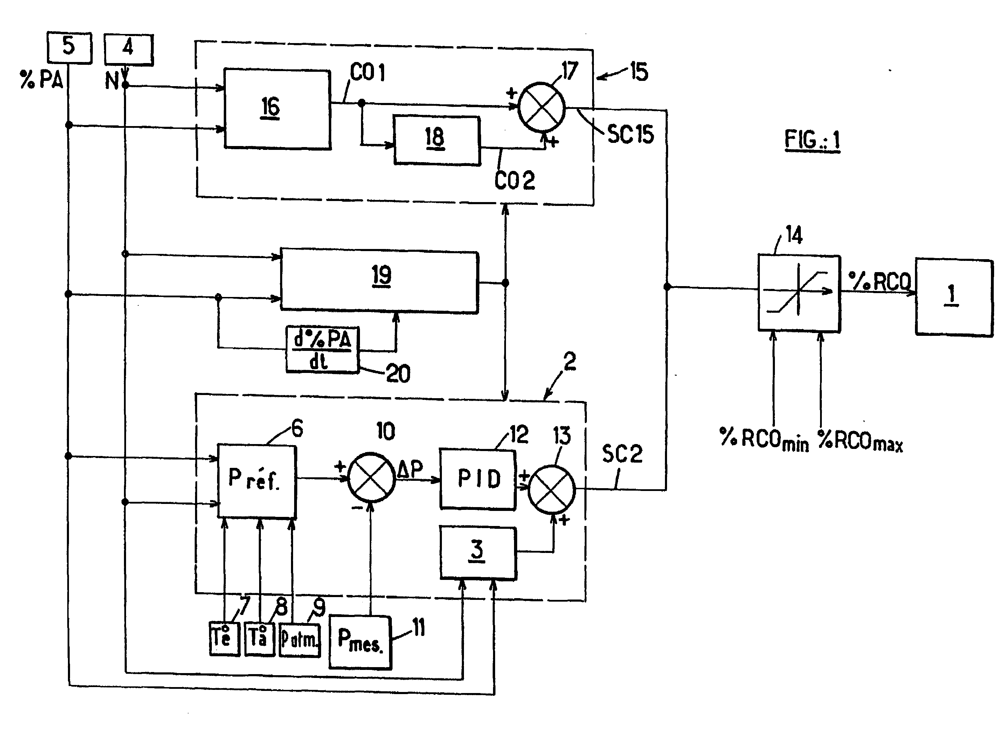

Ceci étant et en se reportant maintenant à la figure 1, pour simplifier le dessin, on a seulement représenté, à l'exclusion du moteur et du turbocompresseur, l'actuateur 1 du turbocompresseur. Cet actuateur reçoit un signal de commande impulsionnel exprimé en %RCO.

Le dispositif de commande comporte des premiers moyens de régulation désignés globalement par le rectangle en pointillés 2. Ces premiers moyens de régulation comprennent une cartographie 3 dans laquelle sont mémorisées des valeurs de %RCO désignées en fonction de deux paramètres qui sont la vitesse de rotation N du moteur à combustion interne et, en tant que paramètre représentant la charge du moteur, le degré %PA d'enfoncement de la pédale d'accélérateur associée au moteur. La vitesse de rotation est délivrée par un capteur 4 et le degré d'enfoncement de la pédale par un capteur 5.

Les premiers moyens de régulation 2 comprennent également un organe de calcul 6 pour déterminer une pression de référence $P_{ref}$, en fonction d'un jeu de paramètres qui comprend les signaux N et %PA délivrés respectivement par les capteurs 4 et 5 et également ceux de trois autres capteurs 7, 8 et 9 fournissant respectivement des valeurs représentatives de la température $T_e$ de l'eau de refroidissement du moteur, de la température extérieure $T_a$ et de la pression atmosphérique $P_{atm}$.

Les premiers moyens de régulation 2 comportent également un soustracteur 10 qui soustrait de la valeur $P_{ref}$ une valeur de pression $P_{mes}$ représentant la valeur d'une pression actuelle du moteur, cette valeur étant relevée par un capteur 11. La différence ∆P entre la pression $P_{ref}$ et la pression $P_{mes}$ est appliquée à un régulateur PID 12. Le signal de sortie de ce dernier est additionné dans un additionneur 13 à la valeur extraite de la cartographie 3.

La régulation effectuée par les moyens de régulation 2 est réalisée en basant les valeurs $P_{ref}$ et $P_{mes}$ sur la pression d'admission du moteur. Dans ce cas, la pression $P_{mes}$ est relevée par un capteur 11 placé dans le collecteur d'admission et l'organe de calcul 6 détermine la valeur $P_{ref}$ en tant que valeur de référence de la pression d'admission.

Les premiers moyens de régulation 2 que l'on vient de décrire sont capables de mettre en oeuvre une première stratégie de commande du turbocompresseur correspondant à un fonctionnement quasi-permanent du moteur à combustion interne, c'est-à-dire sans saut important de la valeur de consigne $P_{ref}$. Cette stratégie correspond à une régulation PID à réaction avec une contribution de régulation en boucle ouverte assurée par la valeur extraite de la cartographie 3. On peut noter que les valeurs déposées dans cette cartographie, correspondent à un fonctionnement nominal théorique d'un moteur idéal, auquel le régulateur PID 12 vient apporter une correction tenant compte de la dispersion que présente le moteur utilisé par rapport à ce moteur idéal.

Ainsi, pendant que prévaut la stratégie de fonctionnement quasi-permanent, le signal de sortie SC2 des moyens de régulation, qui est donc la sortie de l'additionneur 13, est appliqué à un organe d'écrêtage 14 qui limite l'excursion du signal de manière à le contenir entre une valeur %RCO$_{min}$ et une valeur %RCO$_{max}$ admissibles. Le signal ainsi écrêté est appliqué à l'actionneur 1 pour commander le rapport cyclique de son courant de commande qui est pulsé. La variation de ce courant de commande a pour effet une variation de la section de passage des gaz d'échappement produits par le moteur, une faible section de passage correspondant une vitesse de rotation élevée de l'arbre du turbocompresseur.

Le dispositif de commande selon l'invention comprend également de seconds moyens de régulation symbolisés par le rectangle 15 et constituant une boucle de régulation ouverte. Ils présentent une cartographie 16 dans laquelle est mémorisé un jeu de valeurs pouvant être selectionnées en fonction des signaux N et %PA des capteurs 4 et 5. Ce jeu de valeurs est différent de celui contenu dans la cartographie 3 et est déterminé pour élaborer la deuxième stratégie de commande du turbocompresseur. La valeur CO1 sélectionnée dans la cartographie 16 est appliquée à un sommateur 17 qui additionne à cette valeur une valeur CO2 obtenue à partir de la valeur CO1, mais dans le présent exemple modifiée par un filtre 18. La sortie de l'additionneur 17 est le signal de sortie SC15 des seconds moyens de régulation et elle est appliquée à l'écrêteur 14 pour permettre la commande de l'actuateur 1 pendant qu'est mise en oeuvre la seconde stratégie de fonctionnement du turbocompresseur.

Le filtre 18 est conçu pour appliquer à son entrée une équation temporelle de la forme:

$$CO2(t) = K \cdot \frac{dCO1(t)}{dt} - T \cdot \frac{dCO2(t)}{dt}$$

dans laquelle:

- K est le gain de filtrage,
  T est une constante de temps.

Ainsi, le signal SC15 issu des seconds moyens de régulation 15 est constitué par les deux composantes CO1 et CO2 superposées dans l'additionneur 17, l'une des composantes étant sélectionnée dans la cartographie 16 et l'autre étant calculée de manière à décroître d'une valeur initiale, au déclenchement de la seconde stratégie, à une valeur a peu près nulle.

Selon une variante de l'invention, au lieu du filtre 18, on peut également utiliser des cartographies mises en mémoire faisant intervenir des paramètres tels que le régime moteur, le pourcentage d'enfoncement de la pédale d'accélérateur, la dérivé de cette dernière valeur, le temps écoulé depuis l'enfoncement de la pédale etc.

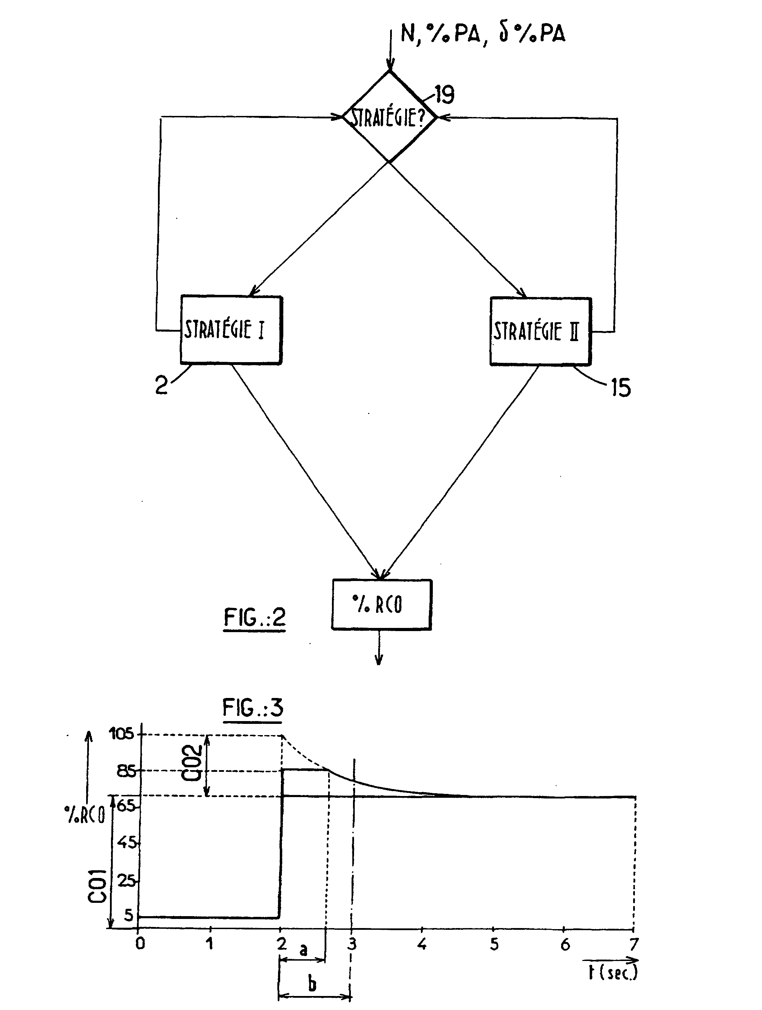

Le dispositif de commande comprend enfin un organe de commutation 19 qui calcule la somme des paramètres N et %PA des capteurs 4 et 5 et de la dérivée du paramètre %PA établie dans un organe de calcul 20 en tenant compte d'une pondération pour chacun des termes de cette somme. Le résultat de ce calcul est comparé à un seuil prédéterminé et si le résultat dépasse ce seuil, c'est la seconde stratégie qui est mise en oeuvre, sinon c'est la première stratégie. On peut donc ainsi commuter entre le fonctionnement quasi-permanent et le fonctionnement transitoire pendant lesquels on met en oeuvre respectivement les premiers 2 et les seconds 15 moyens de régulation. Le fonctionnement de cet organe de commande 19 est illustré sur la figure 2 qui montre qu'en fonction des paramètres N, %PA et d%PA/dt, le procédé de commande choisit entre les stratégies I et II élaborées respectivement par les premiers moyens de commande 2 et les seconds moyens de commande 15, pour aboutir à la production de la valeur de %RCO réellement appliquée à l'actuateur 1.

La figure 3 illustre la mise en oeuvre du procédé que l'on vient de décrire, lorsqu'il survient une soudaine demande d'accélération de la part du conducteur du véhicule.

On suppose que le moteur à combustion interne tourne à faible régime et faible charge selon la première stratégie I. La boucle ouverte des premiers moyens de régulation 2 établit une valeur de %RCO de 5%, par exemple qui est éventuellement ajustée par une valeur de correction déterminée par la boucle à contreréaction formée par le générateur de consigne 6, le soustracteur 10 et le régulateur PID 12. La valeur %RCO appliquée à l'actionneur 1 fait en sorte que le piston du turbocompresseur soit dans une position correspondant à une ouverture totale de l'entrée de ce turbocompresseur. Celui-ci tourne donc à faible vitesse. Dans l'exemple de la figure 3, cette phase de fonctionnement dure arbitrairement jusqu'à l'instant t=2 secondes.

A cet instant, l'organe de commutation 19 constate un dépassement du seuil prédéterminé par la somme des valeurs %PA, N et d%PA/dt, ce qui est représentatif de ce que l'accélérateur associé au moteur est soudainement enfoncé par le conducteur du véhicule. Ceci se traduit par une action de commande de l'organe de commutation 19 qui fait passer le procédé de la stratégie I de fonctionnement quasi-permanent à la stratégie II de fonctionnement transitoire assurée par les seconds moyens de commande 15.

Cette stratégie II consiste d'abord à choisir une valeur CO1 dans la cartographie 16 en fonction de la position actuelle de la pédale (%PA) et de la vitesse N du moteur. Dans le graphe de la figure 3, on suppose que cette valeur de %RCO est égale à 70%. Le signal correspondant est appliqué en tant que première composante à la première entrée de l'additionneur 17.

Cependant, ce signal est également appliqué au filtre 18 qui élabore une seconde composante (ici égale à 35% RCO, par exemple), valeur qui est appliquée à l'autre entrée de l'additionneur 17. La somme des deux valeurs SC15 est fournie à l'écrêteur 14 qui limite la valeur à %RCO$_{max}$, choisie dans l'exemple à 85%. C'est cette valeur qui, pendant une première phase a) de l'accomplissement de la stratégie II est utilisée pour commander l'actionneur 1.

Il en résulte que le piston de la turbine du turbocompresseur se ferme jusqu'à sa butée correspondant à une section minimale de passage des gaz d'échappement avec pour conséquence une accélération du courant de gaz et une mise en vitesse rapide de la roue de turbine du turbocompresseur. Le piston de réglage de celui-ci étant dans cette position, la pression dans le collecteur d'échappement du moteur augmente rapidement du fait que la vitesse de celui-ci s'accroît également rapidement.

Si la contrepression dans le collecteur d'échappement engendrée en raison de cette position du piston perdurait par le maintien à sa valeur maximale du signal de commande de l'actionneur 1, le moteur risquerait de s'étouffer. Dans l'exemple choisi, cela se produirait au bout d'une durée b) de 1 seconde par exemple.

Cependant, grâce à l'invention, le signal de sortie SC15 des moyens de régulation 15 ne conserve pas la valeur maximale au-delà de la fin de la phase a), car la seconde composante CO2 issue du filtre 18, commence à décroître selon une courbe, choisie ici de forme exponentielle. Cette courbe est déterminée par l'équation temporelle décrite ci-dessus. A la fin de la phase a), la valeur de sortie SC15 de l'additionneur 17 rejoint donc la valeur %RCO$_{max}$, puis au delà, le signal de commande de l'actionneur 1 décroît selon la même courbe jusqu'à ce qu'elle devienne égale à zéro.

Il en résulte que le piston de réglage de l'entrée de la turbine du turbocompresseur recule progressivement à l'issue de la phase a) diminuant ainsi la contre-pression imposée au moteur, tout en autorisant une augmentation suffisante de la pression de suralimentation côté compresseur dans le collecteur d'admission du moteur. La courbe exponentielle d'évolution de la valeur %RCO est choisie de telle manière qu'une réduction suffisante intervienne, bien avant qu'il y ait risque d'étouffement du moteur c'est-à-dire avant l'expiration de la période b) de la figure 3.

Le signal de commande %RCO de l'actionneur 1 finit donc par rejoindre une valeur pour laquelle le débit d'air à l'admission du moteur se stabilise. La pression d'admission actuelle aura alors rejoint la pression de consigne et le dispositif de commande peut de nouveau commuter sur les moyens de régulation 2 pour assurer l'exécution de la stratégie I de fonctionnement permanent, lorsque le seuil établi dans le dispositif de commutation est de nouveau franchi vers le bas. Dans le présent exemple, cette commutation intervient au bout de cinq secondes environ, comme représenté sur la figure 3.

Il est à noter que le procédé selon l'invention peut être mis en oeuvre au moyen d'un logiciel approprié exécuté dans le calculateur du moteur à combustion interne.

**Revendications**

1. Procédé de commande d'un turbocompresseur à géométrie variable destiné à assurer la suralimentation d'un moteur à combustion interne, notamment de type Diesel équipant un véhicule automobile, ledit turbocompresseur comprenant un actuateur (1) apte à déterminer la section de passage des gaz d'échappement du moteur vers la roue de turbine du turbocompresseur,

   - ledit procédé consistant

      - à engendrer un signal de commande (%RCO) dudit actuateur (1), sélectivement selon deux stratégies dont une première est mise en oeuvre en fonctionnement quasi-permanent dudit moteur et dont la seconde est appliquée en fonctionnement transitoire de celui-ci à la suite d'une demande brusque d'accélération dudit moteur, la sélection de ladite seconde stratégie étant effectuée par détection de l'évolution dans le temps d'au moins un paramètre (%PA) représentatif de la charge demandée audit moteur, et
      - pendant la mise en oeuvre de ladite première stratégie, à déterminer ledit signal de commande (%RCO) au moyen d'une boucle de régulation à contreréaction (2) dont les paramètres d'entrée sont la pression ($P_{mes}$) mesurée dans le collecteur d'admission dudit moteur et une pression de consigne ($P_{ref}$) représentative de la pression de suralimentation instantanée requise,

   - ce procédé étant **caractérisée en ce qu'**il consiste également, dès la sélection de la seconde stratégie, à établir pour ledit signal de commande (%RCO) une valeur résultant de la superposition d'une première composante (CO1), sensiblement constante pendant ledit fonctionnement transitoire et déterminée dès ladite sélection, en fonction dudit paramètre (%PA) représentatif de la charge et de la vitesse de rotation dudit moteur et une seconde composante (CO2) qui, au début dudit fonctionnement transitoire prend comme valeur initiale celle de ladite première composante (CO1) et qui décroît partir de cette valeur initiale, à une valeur à peu près nulle, de telle sorte que l'évolution dudit signal de commande (%RCO) provoque tout d'abord à une réduction maximale, puis une augmentation progressive de ladite section de passage vers une valeur correspondant à la nouvelle charge demandée à la suite de ladite demande brusque d'accélération, et

   à maintenir la mise en oeuvre de ladite seconde stratégie au moins jusqu'à ce que ladite seconde composante (CO2) atteigne la valeur zéro.

2. Procédé suivant la revendication 1, **caractérisé en ce qu'**il consiste à relever la valeur de ladite première composante (CO1) dans une cartographie (16) en fonction dudit paramètre (%PA) représentatif de la charge demandée audit moteur et de la vitesse de rotation (N) de celui-ci.

3. Procédé suivant l'une quelconque des revendications 1 et 2, **caractérisé en ce que** ledit paramètre représentatif de la charge demandée est le degré d'enfoncement (%PA) de la pédale d'accélérateur associée audit moteur.

4. Procédé suivant l'une quelconque des revendications 2 et 3, **caractérisé en ce qu'**il consiste à imposer à ladite seconde composante (CO2) une loi de décroissance exponentielle.

5. Procédé suivant la revendication 4, **caractérisé en ce qu'**il consiste à engendrer ladite seconde composante (CO2) par filtrage (18) de ladite première composante (CO1) en lui appliquant une équation de filtrage de la forme:

$$CO2(t) = K \cdot \frac{dCO1(t)}{dt} - T \cdot \frac{dCO2(t)}{dt}$$

dans laquelle:

   - CO1 est la valeur de la première composante,
   - CO2 est la valeur de la seconde comosante,
   - K est le gain de filtrage,
     T est une constante de temps.

6. Procédé suivant l'une quelconque des revendications 1 à 5, **caractérisé en ce qu'**il consiste également à écrêter la valeur (SC15) résultant de la superposition desdites première et seconde composantes (CO1, CO2) avant de l'appliquer audit actuateur (1).

7. Procédé suivant l'une quelconque des revendications 1 à 6, **caractérisé en ce qu'**il consiste à comparer à un seuil prédéterminé la somme dudit paramètre (%PA) représentatif de la charge, de la vitesse de rotation (N) dudit moteur et de la dérivée (d%PA/dt) dudit paramètre par rapport au temps, à appliquer un coefficient de pondération à chacun des termes de ladite somme et à opérer la commutation de ladite première stratégie à ladite seconde stratégie, lorsque ladite somme devient supérieure audit seuil.

8. Procédé suivant la revendication 7, **caractérisé en ce qu'**il consiste à opérer la commutation de ladite seconde stratégie à ladite première stratégie, lorsque ladite somme devient inférieure audit seuil.

9. Dispositif pour la mise en oeuvre du procédé suivant l'une quelconque des revendications précédentes.

**Patentansprüche**

1. Steuerungsverfahren eines Abgasturboladers mit veränderlicher Geometrie, der dafür bestimmt ist, die Aufladung eines Verbrennungsmotors sicherzustellen, insbesondere vom Typ Diesel, welcher ein Kraftfahrzeug ausstattet, wobei der Turbolader ein Stellelement (1) aufweist, das fähig ist, den Durchlassquerschnitt von Abgasen des Motors in Richtung zu dem Turbinenrad des Turboladers festzulegen;

 - wobei das Verfahren besteht in:

  - einem Hervorrufen eines Steuerungssignals (% RCO) des Stellelements (1), selektiv gemäß zweier Strategien, von denen eine erste im quasi permanenten Betrieb des Motors eingesetzt wird, und von denen die zweite im Übergangsbetrieb von diesem auf die Folge einer abrupten Nachfrage einer Beschleunigung des Motors angewendet wird, wobei die Auswahl der zweiten Strategie durch Erfassung der Entwicklung über die Zeit von mindestens einem Parameter (% PA) ausgeführt wird, der repräsentativ für die vom Motor geforderte Last ist, und

  - in einem Bestimmen des ersten Strategie das Steuerungssignal (% RCO), während dem Umsetzen mittels einer Regelungsschlaufe mit Rückkopplung (2), deren Eingangsparameter der Druck ($P_{mes}$) ist, welcher im Einlasskrümmer des Motors gemessen wird, und einem Einstelldruck ($P_{ref}$), der repräsentativ für den momentanen erforderlichen Druck einer Aufladung ist,

 - wobei dieses Verfahren **dadurch gekenn-**

**zeichnet ist, dass** es ebenso darin besteht, ab der Auswahl der zweiten Strategie für das Steuerungssignal (% RCO) einen Wert festzulegen, welcher aus der Übereinanderlagerung einer ersten Komponenten (CO1), welche im Wesentlichen während dem Übergangsbetrieb konstant ist, und welche ab der Auswahl bestimmt wird, in Abhängigkeit vom Parameter (% PA), der stellvertretend für die Last und die Drehgeschwindigkeit des Motors ist, und einer zweite Komponente (CO2), welche am Beginn des Übergangsbetriebs als Ausgangswert denjenigen der ersten Komponente (CO1) einnimmt, und welche ausgehend von diesem Ausgangswert abnimmt auf einen Wert nahe bei Null derart, dass die Entwicklung des Steuerungssignals (% RCO) zunächst eine maximale Reduzierung sodann eine progressive Erhöhung des Durchlassquerschnitts in Richtung zu einem Wert hervorruft, welcher der neuen Last entspricht, die folgend auf die abrupte Nachfrage einer Beschleunigung gefordert wird, und

 - das Umsetzen der zweiten Strategie aufrechtzuerhalten, mindestens bis die zweite Komponente (CO2) den Wert Null erreicht.

2. Verfahren gemäß Anspruch 1, **dadurch gekennzeichnet, dass** es darin besteht, den Wert der ersten Komponente (CO1) in eine Kartographie (16) in Abhängigkeit des Parameters (% PA) aufzunehmen, welcher repräsentativ für die vom Motor geforderte Last und die Drehgeschwindigkeit (N) desselbigen ist.

3. Verfahren gemäß irgendeinem der Ansprüche 1 und 2, **dadurch gekennzeichnet, dass** der Parameter, welcher repräsentativ für die geforderte Last ist, der Grad eines Eindrückens (% PA) des zum Motor gehörenden Beschleunigungspedals ist.

4. Verfahren gemäß irgendeinem der Ansprüche 2 und 3, **dadurch gekennzeichnet, dass** es darin besteht der zweiten Komponente (CO2) ein Gesetz einer exponentiellen Abnahme aufzuerlegen.

5. Verfahren gemäß Anspruch 4, **dadurch gekennzeichnet, dass** es darin besteht, die zweite Komponente (CO2) durch Filterung (18) der ersten Komponente (CO1) zu erzeugen, unter einem Anwenden auf sie einer Filterungsgleichung der Form:

$$CO2(t) = K \cdot \frac{dCO1(t)}{dt} - T \cdot \frac{dCO2(t)}{dt}$$

in welcher:

 - CO1 der Wert der ersten Komponente ist;

- CO2 der Wert der zweiten Komponente ist;
- K der Filterungsfaktor ist;
- T eine Zeitkonstante ist.

6. Verfahren gemäß irgendeinem der Ansprüche 1 bis 5, **dadurch gekennzeichnet, dass** es auch darin besteht, den Wert (SC15), welcher aus der Übereinanderlagerung der ersten und zweiten Komponente (CO1, CO2) resultiert, in den Spitzen zu kappen, vor einem Anlegen an das Stellelement (1).

7. Verfahren gemäß irgendeinem der Ansprüche 1 bis 6, **dadurch gekennzeichnet, dass** es in einem Vergleichen der Summe des Parameters (% PA) besteht, welcher stellvertretend für die Last ist, mit einer vorbestimmten Schwelle, der Drehgeschwindigkeit (N) des Motors und der Ableitung (d%PA/dt) des Parameters über die Zeit, einen Gewichtungskoeffizienten an jeden der Terme der Summe anzulegen und die Umschaltung der ersten Strategie auf die zweite Strategie durchzuführen, wenn die Summe größer als der Schwellenwert wird.

8. Verfahren gemäß Anspruch 7, **dadurch gekennzeichnet, dass** es darin besteht, die Umschaltung der zweiten Strategie in die erste Strategie durchzuführen, wenn die Summe geringer als der Schwellenwert wird.

9. Vorrichtung für die Umsetzung des Verfahrens gemäß irgendeinem der vorhergehenden Ansprüche.

**Claims**

1. A process for controlling a turbocharger of variable geometry which is intended to provide for boost for an internal combustion engine, in particular of Diesel type in a motor vehicle, the turbocharger comprising an actuator (1) capable of determining the flow section for the exhaust gases from the engine towards the turbine impeller of the turbocharger, the process comprising

   - producing a signal (%COR) for control of said actuator (1) selectively in accordance with two strategies of which a first is implemented in a quasi-permanent mode of operation of said engine and the second is applied in a transient mode of operation thereof following an abrupt requirement for acceleration on the part of said engine, selection of said second strategy being effected by detecting the variation in respect of time of at least one parameter (%PA) representative of the load demanded from the engine, and

   - during implementation of said first strategy, determining said control signal (%COR) by means of a feedback regulating loop (2) of which the input parameters are the pressure $(P_{mes})$ measured in the induction manifold of the engine and a reference pressure $(P_{ref})$ representative of the instantaneous boost pressure required,

   said process being **characterised in that** it also comprises

   - as from selection of the second strategy establishing for said control signal (%COR) a value resulting from the superposition of a first component (CO1) which is substantially constant during said transient mode of operation and determined as from said selection, in dependence on said parameter (%PA) representative of the load and the speed of rotation of said engine and a second component (CO2) which at the beginning of said transient mode of operation assumes as its initial value that of said first component (CO1) and which decreases from said initial value to a value of approximately zero, in such a way that the variation in said control signal (%COR) causes firstly a maximum reduction then a progressive increase in said flow section towards a value corresponding to the new load demanded following said abrupt requirement for acceleration, and

   - maintaining implementation of said second strategy at least until said second component (CO2) attains the value zero.

2. A process according to claim 1 **characterised in that** it comprises detecting the value of said first component (CO1) in a mapping (16) in dependence on said parameter (%PA) representative of the load demanded from said engine and the speed of rotation thereof.

3. A process according to either one of claims 1 and 2 **characterised in that** said parameter representative of the load demanded is the degree of depression (%PA) of the accelerator pedal associated with said engine.

4. A process according to either one of claims 2 and 3 **characterised in that** it comprises imposing on said second component (CO2) an exponential decrease law.

5. A process according to claim 4 **characterised in that** it comprises producing said second component (CO2) by filtering (18) of said first component (CO1) by applying thereto a filtering equation of the following form:

$$CO2(t) = K \cdot \frac{dCO1(t)}{dt} - T \cdot \frac{dCO2(t)}{dt}$$

in which:

- CO1 is the value of the first component,

- CO2 is the value of the second component,

- K is the filtering gain, and

- T is a time constant.

6. A process according to any one of claims 1 to 5 **characterised in that** it also comprises clipping the value (SC15) resulting from the superposition of said first and second components (CO1, CO2) prior to applying it to said actuator (1).

7. A process according to any one of claims 1 to 6 **characterised in that** it comprises comparing to a predetermined threshold the sum of said parameter (%PA) representative of the load, the speed of rotation (N) of the engine and the differential (d%PA/dt) of said parameter with respect to time, applying a weighting coefficient to each of the terms of said sum and effecting switching of said first strategy to said second strategy when said sum becomes higher than said threshold.

8. A process according to claim 7 **characterised in that** it comprises effecting switching of said second strategy to said first strategy when said sum becomes less than said threshold.

9. Apparatus for carrying out the process according to any one of the preceding claims.

FIG.: 1

EP 1 031 713 B1

N, %PA, δ%PA

STRATÉGIE? — 19

STRATÉGIE I — 2

STRATÉGIE II — 15

% RCO

FIG.:2

FIG.:3